# EUROPEAN PATENT APPLICATION

(11) **EP 2 385 722 A1**
(43) Date of publication of application: **09.11.2011**
(21) Application number: 10731063.3
(22) Date of filing: 15.01.2010
(51) Int. Cl.: H04W 36/00

(54) **SWITCHING DATA FORWARDING PROCESSING METHOD, APPARATUS AND SYSTEM**

(30) Priority: 15.01.2009 CN 200910076681; 25.03.2009 CN 200910130190
(71) Applicant: Huawei Technologies Co., Ltd., Shenzhen, Guangdong 518129 (CN)
(72) Inventor: YU, Qi c/o Huawei Technologies Co.Ltd., Int.Prop.Dept., Shenzhen (CN); GUO, Wei c/o Huawei Technologies Co.Ltd., Int.Prop.Dept., Shenzhen (CN)
(74) Representative: Kreuz, Georg Maria
(86) International application number: PCT/CN2010/070222
(87) International publication number: WO 2010/081429

(57) **Abstract**

A method, an apparatus, and a system for data forwarding processing during handover are disclosed. The method includes: receiving data forwarding bearer information wherein the data forwarding bearer information suggests whether a bearer is subject to data forwarding; determining a bearer subj ect to data forwarding according to the data forwarding bearer information; and returning bearer information about the bearer subject to data forwarding to perform data forwarding. The apparatus includes a receiving module, a processing module, and a sending module. The corresponding system for data forwarding processing during handover is also disclosed. The method, apparatus, and system for data forwarding processing during handover under the present invention avoid data forwarding on unnecessary bearers and reduce the waste of resources.

## Description

This application claims priority to Chinese Patent Application No. 200910076681.9, filed with the Chinese Patent Office on January 15, 2009, and Chinese Patent Application No. 200910130190.8, filed with the Chinese Patent Office on March 25, 2009, and both entitled "Method, Apparatus and System for Data Forwarding Processing During Handover", which are incorporated herein by reference in their entirety.

### FIELD OF THE INVENTION

The present invention relates to communication technologies, and in particular, to a method, an apparatus, and a system for data forwarding processing during handover.

### BACKGROUND OF THE INVENTION

In the communications field, the Long Term Evolution (Long Term Evolved, LTE for short) technology or System Architecture Evolution (System Architecture Evolved , SAE for short) technology is a hot topic of research currently. The LTE/SAE aims to provide a cost-efficient network which reduces delay, increases the user data rate, and improves the system capacity and coverage. The LTE/SAE provides PS (packet switch Packet Switched) domain services over the Internet Protocol (IP) network.

The network architecture of the LTE/SAE includes the following components: an MME (Mobility Management Entity Mobility Management Entity), which is responsible for managing mobility management contexts of a UE, such as a user identifier, mobility management state, and location information, processing Non Access Stratum (Non Access Stratum, NAS for short) signaling, and maintaining security of the NAS signaling and an SAE gateway, which is categorized into SGW (Serving Gateway Serving Gateway) and PGW (Packet Data Network Gateway Packet Data Network Gateway). The SGW and the PGW are two logical entities that exist on the same physical entity or different physical entities. The SGW stores the user-plane contexts of the UE (user equipment user equipment), such as the IP address and routing information, and is responsible for lawful interception and packet data routing. The interface between the S-GW and the MME is S11, which is responsible for communication between the MME and the UPE( User Plane Entity User Plane Entity) and exchanging mobility management information and session control information of the UE. The MME is connected to the control plane of an E-UTRAN (Evolved Universal Terrestrial Radio Access Network Evolved Universal Terrestrial Radio Access Network) through an S1-MIME interface, and the SGW is connected to the user plane of the E-UTRAN through an S1-U interface. Meanwhile, the MME is connected to the 2G/3G SGSN (Serving GPRS Support Node) through an S3 interface, and the SGW is connected to the 2G/3G SGSN through an S4 interface. The MME serves as a mobility control-plane anchor of the UE between the 3G network and the SAE network, and the SGW serves as a mobility user-plane anchor of the UE between the 3G network and the SAE network. The E-UTRAN is an evolved NodeB (eNB) in the present invention. An X2 interface may exist between one eNB and another eNB. The X2 interface provides the functions of the user plane and the control plane. The PGW serves as a user-plane anchor which enables the UE to access a Packet Data Network (PDN). The PGW communicates with an external PDN through an SGi reference point, and provides the functions of routing and forwarding packets, the function of enhancing policy charging, and the function of filtering packets based on each user. The PGW is connected to the SGW through an S5 interface to transmit control information such as bearer setup, modification and deletion, and routing the packet data. The SGSN (Serving GPRS Support Node, SGSN for short) is connected to the SGW through an S4 interface, and is a mobility management control-plane anchor. The UTRAN may be an RNC (Radio Network Controller Radio Network Controller), and is connected to the SGW through an S12 interface so that the UTRAN can access the component of the network. The UTRAN is responsible for mobility management, call processing, link management, and handover mechanism.

In the prior art, when the target MME/SGSN participates in setting up a bearer for data forwarding, the target MME/SGSN sets up data forwarding tunnels, and the method for setting up data forwarding tunnels in the prior art causes a waste of resources.

### SUMMARY OF THE INVENTION

The embodiments of the present invention provide a method, an apparatus, and a system for data forwarding processing during handover, and therefore, the bearers required for forwarding data are determined, data forwarding tunnels are set up only for the bearers required for forwarding data, and therefore the resource waste is reduced.

An embodiment of the present invention provides a method for data forwarding processing during handover. The method includes:
receiving data forwarding bearer information wherein the data forwarding bearer information suggests whether a bearer is subject to data forwarding ;determining a bearer subject to data forwarding according to the data forwarding bearer information; and
returning bearer information about the bearer subject to data forwarding to perform data forwarding.

An embodiment of the present invention provides another method for data forwarding processing during handover. The method includes:
by a target SGSN, determining a bearer subject to data forwarding according to a bearer Quality of Service (QoS) parameter accepted by a target RNC, a configured operator policy and/or a configuration parameter; and
returning bearer information about the determined bearer subj ect to data forwarding to a source eNB, so as to perform data forwarding.

An embodiment of the present invention provides another method for data forwarding processing during handover. The method includes:
determining, by a target MME, a bearer subject to data forwarding according to a bearer QoS parameter accepted by a target eNB, a configured operator policy and/or a configuration parameter; and
returning bearer information about the determined bearer subj ect to data forwarding to a source RNC, so as to perform data forwarding.

An embodiment of the present invention provides an apparatus for data forwarding processing during handover. The apparatus includes:
a receiving module, configured to receive data forwarding bearer information wherein the data forwarding bearer information suggests whether a bearer is subject to data forwarding;
a processing module, configured to determining a bearer subj ect to data forwarding according to the data forwarding bearer information; and
a sending module, configured to return bearer information about the determined bearer subject to data forwarding, so as to perform data forwarding.

An embodiment of the present invention provides a system for data forwarding processing during handover. The system includes:
a source MME, configured to send data forwarding bearer information;
a target RNC/SGSN, configured to determine a bearer subject to data forwarding according to the data forwarding bearer information; and
a source eNB, configured to receive bearer information about the determined bearer subj ect to data forwarding, so as to perform data forwarding.

An embodiment of the present invention provides another system for data forwarding processing during handover. The system includes:
a target SGSN, configured to send data forwarding bearer information;
a target RNC, configured to determine a bearer subject to data forwarding according to the data forwarding bearer information; and
a source eNB, configured to receive bearer information about the determined bearer subj ect to data forwarding, so as to perform data forwarding, where the bearer is determined by the target RNC.

An embodiment of the present invention provides a system for data forwarding processing during handover. The system includes:
a target SGSN, configured to determine a bearer subject to data forwarding according to a bearer QoS parameter accepted by a target RNC, a configured operator policy and/or a configuration parameter; and
a source eNB, configured to receive bearer information about the determined bearer subject to data forwarding, so as to perform data forwarding.

An embodiment of the present invention provides a system for data forwarding processing during handover. The system includes:
a source SGSN, configured to send data forwarding bearer information;
a target eNB/MME, configured to determine a bearer subject to data forwarding according to the data forwarding bearer information; and
an RNC, configured to receive bearer information about the determined bearer subject to data forwarding, so as to perform data forwarding.

An embodiment of the present invention provides a system for data forwarding processing during handover. The system includes:
a target MME, configured to send data forwarding bearer information;
a target eNB, configured to determine a bearer subject to data forwarding according to the data forwarding bearer information; and
a source RNC, configured to receive bearer information about the determined bearer subject to data forwarding, so as to perform data forwarding, where the bearer is determined by the target eNB.

An embodiment of the present invention provides a system for data forwarding processing during handover. The system includes:
a target MME, configured to determine a bearer subject to data forwarding according to a bearer QoS parameter accepted by a target eNB, a configured operator policy and/or a configuration parameter; and
a source RNC, configured to receive bearer information about the determined bearer subj ect to data forwarding, so as to perform data forwarding.

Through the method, apparatus, and system for data forwarding processing during handover in the embodiments of the present invention, the bearer subj ect to data forwarding are suggested beforehand or determined according to parameters. Therefore, data forwarding on unnecessary bearers is avoided, and therefore the resource waste is reduced.

### BRIEF DESCRIPTION OF THE DRAWINGS

To describe the technical solution under the present invention more clearly, the following describes the accompanying drawings involved in description of the embodiments of the present invention. Apparently, the accompanying drawings described below are illustrative rather than exhaustive. Persons of ordinary skill in the art can derive other drawings from such accompanying drawings without any creative effort.
FIG. 1 is a flowchart of a method for data forwarding processing during handover in a first embodiment of the present invention;
FIG. 2 shows a structure of an apparatus for data forwarding processing during handover in the first embodiment of the present invention;
FIG. 3 is a flowchart of a method for data forwarding processing during handover in a second embodiment of the present invention;
FIG. 4 is a flowchart of handing over a UE from an LTE to a UMTS in the first embodiment of the present invention;
FIG. 5 is a flowchart of handing over a UE from an LTE to a UMTS in the second embodiment of the present invention;
FIG. 6 is a flowchart of handing over a UE from an LTE to a UMTS in a third embodiment of the present invention;
FIG. 7 is a flowchart of handing over a UE from an LTE to a UMTS in a fourth embodiment of the present invention;
FIG. 8 is a flowchart of handing over a UE from an LTE to a UMTS in a fifth embodiment of the present invention;
FIG. 9 is a flowchart of handing over a UE from an LTE to a UMTS in a sixth embodiment of the present invention;
FIG. 10 is a flowchart of handing over a UE from an LTE to a UMTS in a seventh embodiment of the present invention;
FIG. 11 is a flowchart of a method for data forwarding processing during handover in the third embodiment of the present invention;
FIG. 12 shows a structure of a system for data forwarding processing during handover in the first embodiment of the present invention;
FIG. 13 shows a structure of a system for data forwarding processing during handover in the second embodiment of the present invention;
FIG. 14 shows a structure of a system for data forwarding processing during handover in the third embodiment of the present invention;
FIG. 15 is a flowchart of a method for data forwarding processing during handover in the fourth embodiment of the present invention;
FIG. 16 is a flowchart of handing over a UE from a UMTS to an LTE in the first embodiment of the present invention;
FIG. 17 is a flowchart of handing over a UE from a UMTS to an LTE in the second embodiment of the present invention;
FIG. 18 is a flowchart of handing over a UE from a UMTS to an LTE in the third embodiment of the present invention;
FIG. 19 is a flowchart of handing over a UE from a UMTS to an LTE in the fourth embodiment of the present invention;
FIG. 20 is a flowchart of handing over a UE from a UMTS to an LTE in the fifth embodiment of the present invention;
FIG. 21 is a flowchart of handing over a UE from a UMTS to an LTE in the sixth embodiment of the present invention;
FIG. 22 is a flowchart of a method for data forwarding processing during handover in the fifth embodiment of the present invention;
FIG. 23 shows a structure of a system for data forwarding processing during handover in the fourth embodiment of the present invention;
FIG. 24 shows a structure of a system for data forwarding processing during handover in the fifth embodiment of the present invention;
FIG. 25 shows a structure of a system for data forwarding processing during handover in the sixth embodiment of the present invention; and
FIG. 26 is a flowchart of a method for data forwarding processing during handover in an embodiment of the present invention.

### DETAILED DESCRIPTION OF THE EMBODIMENTS

The technical solution under the present invention is described below with reference to the accompanying drawings and exemplary embodiments.

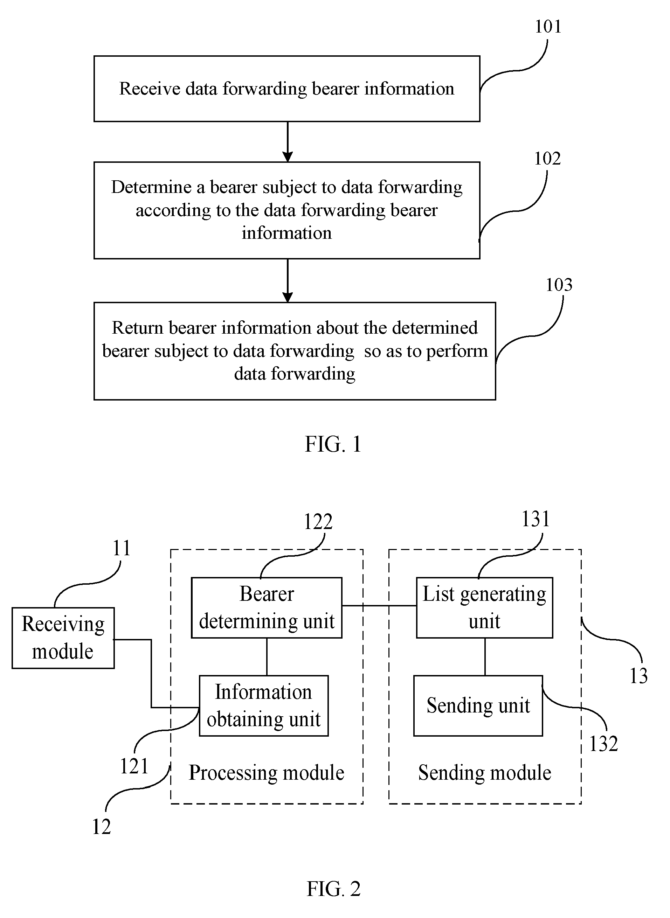

By using the method for data forwarding processing during handover in an embodiment of the present invention, when the UE is handed over between different systems, the network element (such as the source MME, source eNB, source RNC, or source SGSN) in the source system suggests a bearer subject to data forwarding; the network element in the target system determines a bearer subject to data forwarding ("data forwarding bearer" for short) according to the suggestion. Alternatively, the network element in the target system suggests or determines a bearer subj ect to data forwarding according to actual network conditions, and returns the bearer information about the determined bearer subj ect to data forwarding to the source eNB or RNC, so as to perform data forwarding during handover. FIG. 1 is a flowchart of a method for data forwarding processing during handover in the first embodiment of the present invention. As shown in FIG. 1, the method includes the following steps:
Step 101: Receive data forwarding bearer information which suggests whether a bearer is subj ect to data forwarding.
Step 102: Determine a bearer subj ect to data forwarding according to the data forwarding bearer information.
Step 103: Return bearer information about the determined bearer subj ect to data forwarding, so as to perform data forwarding.

The method for data forwarding processing during handover in this embodiment is applicable to the process of handover of the UE from the LTE to the UMTS or from the UMTS to the LTE. When the UE is handed over from the LTE to the UMTS, the technical solution in this embodiment may be implemented by the target SGSN or target RNC, and the source eNB or source MME in the source system suggests whether a bearer is subject to data forwarding. This suggestion may also be put forward by the target SGSN, and the target RNC determines a bearer subject to data forwarding according to the suggestion. When the UE is handed over from the UMTS to the LTE, the technical solution in this embodiment may be implemented by the target MME or target eNB, and the source RNC or source SGSN in the source system suggests whether a bearer is subject to data forwarding. This suggestion may be put forward by the target MME, and the target eNB determines a bearer subj ect to data forwarding according to the suggestion. The method for data forwarding processing during handover sets up data forwarding tunnel only for the bearer subject to data forwarding, and therefore reduces the resource waste.

Corresponding to the embodiment above, an apparatus for data forwarding processing during handover is provided in an embodiment of the present invention. FIG. 2 shows a structure of an apparatus for data forwarding processing during handover in a first embodiment of the present invention. As shown in FIG. 2, the apparatus includes: a receiving module 11, configured to receive data forwarding bearer information which suggests whether a bearer is subject to data forwarding; a processing module 12, configured to determine a bearer subject to data forwarding according to the data forwarding bearer information; and a sending module 13, configured to return bearer information about the determined bearer subj ect to data forwarding, so as to perform data forwarding.

The apparatus for data forwarding processing during handover in this embodiment is equivalent to an eNB in the UMTS system or an MME, or equivalent to an RNC or an SGSN in the LTE system. The method for data forwarding processing during handover in this embodiment sets up data forwarding tunnel for only the bearer subject to data forwarding, and therefore reduces the resource waste.

In addition, the sending module 13 in this embodiment may further include: a list generating unit 131, configured to generate a parameter bearer forwarding list that includes the beaarer information about a bearer subject to data forwarding; and a sending unit 132, configured to send the parameter bearer forwarding list.

The processing module 12 in the foregoing embodiment may further includes: an information obtaining unit 121, configured to obtain data forwarding bearer information from a source-to-target transparent container generated by the source eNB or source RNC; and a bearer determining unit 122, configured to determine a bearer subject to data forwarding according to the data forwarding bearer information.

In this embodiment, the data forwarding bearer information suggesting which bearer is subj ect to data forwarding may be included in the source-to-target transparent container, or carried in a new message, a parameter in an existing message, or a field in a parameter.

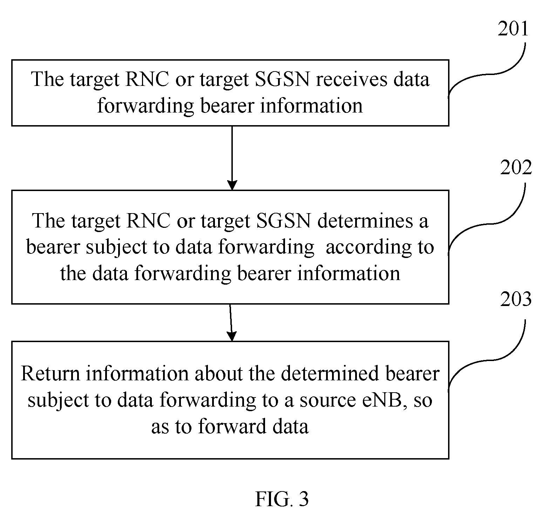

FIG. 3 is a flowchart of a method for data forwarding processing during handover in the second embodiment of the present invention. As shown in FIG. 3, the method includes the following steps:
Step 201: The target RNC or target SGSN receives data forwarding bearer information sent by a source MME. In this embodiment, when the UE is handed over from the LTE to the UMTS, the data forwarding bearer information may be carried in a new message added in an existing signaling, a parameter in the existing message, or a certain field in a parameter. Specifically, the data forwarding bearer information may be generated by the source eNB or source MME. If the data forwarding bearer information is generated by the source eNB, the data forwarding bearer information may be placed in the source-to-target transparent container, or carried as an independent parameter in a Handover Required message. For example, a bearer request data forwarding list is generated, and the list may store only the bearer subject to data forwarding, or store all bearers with an indication being set on the bearer subj ect to data forwarding.
Step 202: The target RNC or target SGSN determines the bearer subject to data forwarding according to the data forwarding bearer information. This step may be performed by the target RNC or target SGSN. If the target RNC performs this step, the target RNC may allocate dedicated user-plane resources for data forwarding. When determining the bearer subject to data forwarding, the target SGSN may refer to one or any combination of the bearer QoS parameter accepted by the target RNC,a configured operator policy, a configuration information of the target SGSN, and data forwarding bearer information. The operator policy may specify whether to support the data forwarding, which types of service data can be forwarded, and which user data can be forwarded.
Step 203: Return the bearer information about the determined bearer subj ect to data forwarding to the source eNB, so as to perform data forwarding during handover. In this step, the target RNC or target SGSN determines the bearer subj ect to data forwarding, and returns the information about the bearer to the source eNB, and the source eNB initiates data forwarding.

In the method for data forwarding processing during handover in this embodiment, the source eNB or source MME sends a suggestion about the bearer subject to data forwarding to the target RNC or target SGSN by adding the suggestion into an independent parameter or a field in an existing parameter. The target RNC or target SGSN determines the bearer subject to data forwarding by referring to the suggestion. In this way, the data forwarding tunnel is set up for only the bearer subject to data forwarding, and therefore the resource waste is reduced.

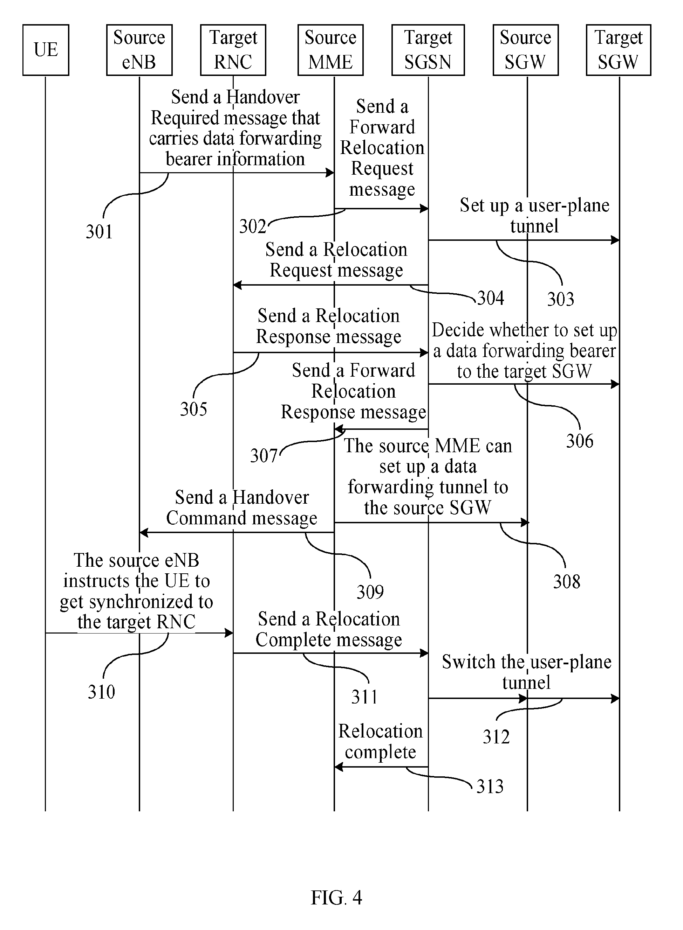

The technical solution under the present invention is described below with reference to embodiments. The description is based on the following assumptions: the UE is handed over from the LTE to the UMTS, and the source eNB adds the suggestion about the bearer subject to data forwarding (that is, data forwarding bearer information) into a source-to-target transparent container, and the target RNC allocates user-plane resources for data forwarding. FIG. 4 is a flowchart of handing over a UE from an LTE to a UMTS in the first embodiment of the present invention. As shown in FIG. 4, the flowchart includes the following steps:
Step 301: The source eNB sends a Handover Required message to the source MME. The message may carry parameters such as source-to-target transparent container(Source To Target Transparent container) and target ID (Target ID). The source-to-target transparent container constructed by the source eNB is a transparent container from a source RNC to a target RNC, and only the target RNC can parse the content in it. Transparent transmission is performed between the source MME and the target SGSN. The data forwarding bearer information added in the transparent container from the source RNC to the target RNC in this step may be (1) a RABs Request Data Forwarding list(RABs Request data forwarding List ) which includes bearer identifiers (RAB-id) of all bearers and an indication for each bearer suggesting whether the bearer is subject to data forwarding; or (2) a RABs Request Data Forwarding List (RABs Request data forwarding List), which includes only the RAB-id of a bear suggested subject to data forwarding. In order for the source-to-target transparent container to indicate the bearer suggested subject to data forwarding, the information about such bearers may be included in a new message, a parameter in an existing message, or a field in such a parameter, or in other ways (including by using different messages).
Step 302: The source MME sends a Forward Relocation Request message to the target SGSN. The message may carry parameters such as source-to-target transparent container, target ID, UE bearer context, and UE mobility management context. The source-to-target transparent container in this step also includes the data forwarding bearer information.
Step 303: When the target SGSN selects a new SGW, the target SGSN can set up a user-plane tunnel to the target SGW according to the bearer in the UE bearer context, and the target SGW allocates user-plane resources for the bearer.
Step 304: The target SGSN sends a Relocation Request message to the target RNC. The message may carry parameters such as RABs To Be Setup List and source-to-target transparent container (Source To Target Transparent container).
Step 305: The target RNC may determine the bearer subject to data forwarding according to the data forwarding bearer information, and allocate dedicated user-plane resources for data forwarding. Specifically, the parameters such as Iu Transport Association (Iu Transport Association) and Transport Layer Address that are dedicated to data forwarding are added in the RAB Setup List(RABs Setup List) for data forwarding, and a Forward Relocation Response message that carries the information about the determined bearer subject to data forwarding is sent to the target SGSN. In this step, the target RNC allocates dedicated user-plane resources for data forwarding so that the data forwarded by the source eNB and the downlink data sent by the target SGSN or target SGW use different user-plane resources, and that the target RNC can sort data conveniently.
Step 306: The target SGSN decides whether to set up a data forwarding bearer to the target SGW by identifying the user-plane resources allocated for data forwarding in the previous step and taking account of one or any combination of the factors: indirect data forwarding, direct data forwarding, configuration data on the SGSN, and whether the SGW changes.
Step 307: The target SGSN sends a Forward Relocation Response(Forward Relocation Response) message to the source MME. If direct data forwarding (namely, the data is forwarded from the source eNB to the target RNC) is performed, or if the SGW remains unchanged, the message may carry the information such as user-plane resources allocated by the target RNC in step 305. If indirect data forwarding is performed and the SGW changes, the message may carry the information such as user-plane resources allocated by the target SGW in step 306.
Step 308: If indirect data forwarding is performed, the source MME may set up a data forwarding tunnel to the source SGW through a message that carries the data forwarding user-plane resources mentioned in step 307.
Step 309: The source MME sends a Handover Command(Handover Command) message to the source eNB. The Handover Command message may carry the data forwarding user-plane resources mentioned in step 308, and the source eNB may perform downlink data forwarding.
Step 310: The source eNB instructs the UE to get synchronized to the target RNC.
Step 311: After detecting that the UE is synchronized, the target RNC sends a Relocation Complete message to the target SGSN.
Step 312: The target SGSN switches the user-plane tunnel to the target RNC.
Step 313: The target SGSN notifies the source MME that the relocation is complete.

In the foregoing embodiment, if the source eNB adds the data forwarding bearer information into the source-to-target transparent container, it is possible that the target RNC does not allocate dedicated user-plane resources for data forwarding, and the target SGSN can determine which bearer is subject to data forwarding or the target SGSN cannot determine which bearer is subject to data forwarding.

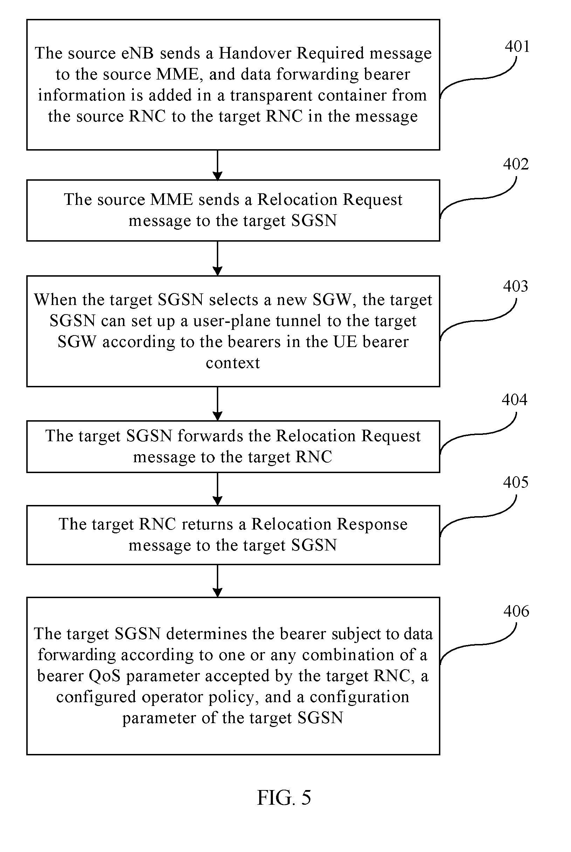

FIG. 5 is a flowchart of handing over a UE from an LTE to a UMTS in the second embodiment of the present invention. As shown in FIG. 5, the flowchart includes the following steps:
Steps 401-404 are the same as steps 301-304 in the previous embodiment.
Step 405: The target RNC returns a Relocation Response message to the target SGSN. The message does not carry the data forwarding bearer information.
Step 406: The target SGSN may decide which bearer is subject to data forwarding according to one or any combination of bearer QoS parameter accepted by the target RNC, a configured operator policy, and a configuration parameter of the target SGSN. The target SGSN may decide whether to set up a data forwarding bearer to the target SGW by taking account of indirect data forwarding, direct data forwarding, operator configuration and/or whether the SGW changes.
Steps 407-413 are the same as steps 307-313 in the previous embodiment.

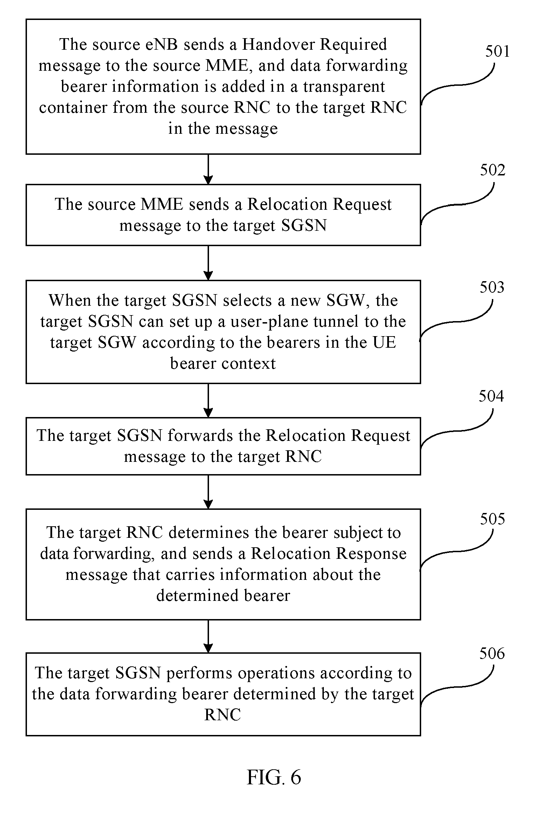

In addition, it is also possible that the target SGSN cannot determine which bearer is subject to data forwarding. FIG. 6 is a flowchart of handing over a UE from an LTE to a UMTS in the third embodiment of the present invention. As shown in FIG. 6, the flowchart includes the following steps:
Steps 501-504 are the same as steps 401-404 in the previous embodiment.
Step 505: The target RNC determines the bearer subject to data forwarding. No dedicated user-plane resources for data forwarding need to be allocated. That is, the data forwarded by the source eNB and the downlink data sent by the target SGW or target SGSN use the same user-plane resources. A Relocation Response message that carries the information about the determined bearer subject to data forwarding is sent. In the RAB Setup List(RABs Setup List) in the Relocation Response message, a forwarding indication(Forwarding Indication) may be added for each bearer; or a RABs Forwarding List(RABs Forwarding List) that includes all bearers is added, and this list further includes a forwarding indication for each bearer; or a RABs Forwarding List that includes only the determined bearer subject to data forwarding is added. The target RNC allocates downlink user-plane resources for receiving downlink data from the target SGSN or target SGW after handover.
Step 506: The target SGSN may determine the data forwarding bearer according to one or any combination of the data forwarding bearer determined by the target RNC in step 505, configuration data, and operator configuration data. If direct data forwarding is performed or the SGW remains unchanged, the target SGSN may send the downlink user-plane resources, which are allocated by the RNC in step 505, to the source MME in step 507. If indirect data forwarding is performed and the SGW changes, the target SGSN may send the downlink user-plane resources, which are allocated in step 505, to the target SGW in step 506 with a view to setting up an indirect data forwarding tunnel, and send the resources to the source MME in step 507.

For details about steps 507-513, see steps 307-313 in the embodiment above.

In the three embodiments above, the source eNB adds the data forwarding bearer information into a source-to-target transparent container. The data forwarding bearer information may also be set as an independent parameter in a Handover Required message sent by the source eNB to the source MME. In this case, the target RNC may allocate dedicated user-plane resources for data forwarding, or allocate no dedicated user-plane resources for data forwarding.

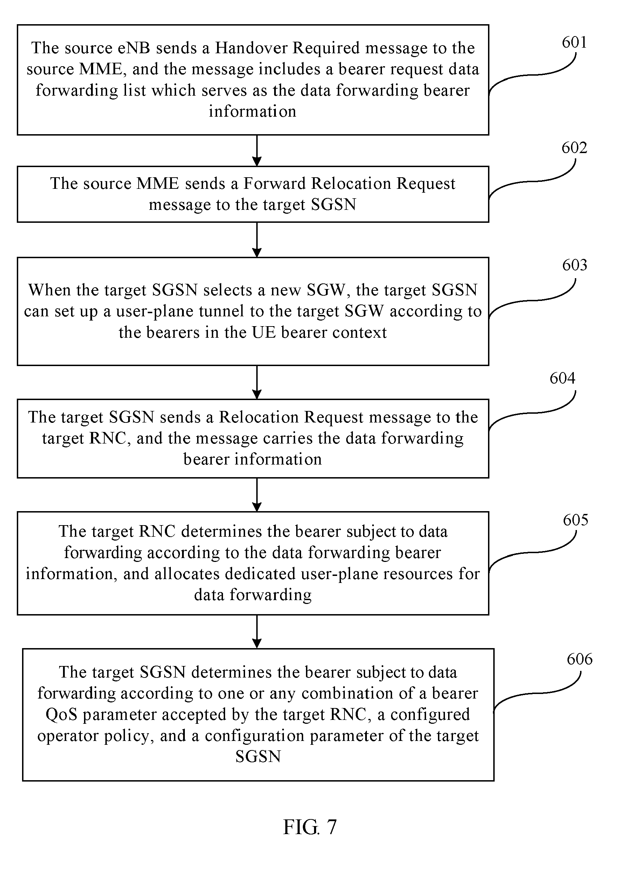

FIG. 7 is a flowchart of handing over a UE from an LTE to a UMTS in the fourth embodiment of the present invention. As shown in FIG. 7, the flowchart includes the following steps:
Step 601: The source eNB sends a Handover Required message to the source MME. The message may carry parameters such as source-to-target transparent container(Source To Target Transparent container), target ID(Target ID), and bearer request data forwarding list(Bearer Request data forwarding List). As data forwarding bearer information, the bearer request data forwarding list may include: (1) bearer IDs of all bearers and a forwarding indication for each bearer indicating whether the bearer is suggested subject to data forwarding; or (2) only the bearer IDs of the bearers suggested subject to data forwarding.
Step 602: The source MME sends a Forward Relocation Request (Forwarding Relocation Request)message to the target SGSN. The message carries the bearer request data forwarding list. The bearer suggested subject to data forwarding may be indicated in a new message added in existing signaling, a parameter in an existing message, or a field in such a parameter, or in other ways(including by using different messages or signaling).
Step 603: This step is the same as step 303 in the embodiment above.
Step 604: The target SGSN sends a Relocation Request message to the target RNC. The message carries data forwarding bearer information, and the information may exist in these forms: (1) a request forwarding indication is set in the RABs To Be Setup List, where the request forwarding indication for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer ID of the bearer suggested subject to data forwarding.
Step 605: The target RNC determines the bearer subj ect to data forwarding according to the data forwarding bearer information, and allocates dedicated user-plane resources for data forwarding. Specifically, the parameters such as Iu Transport Association and Transport Layer Address that are dedicated to data forwarding are added in the RAB Setup List for data forwarding, and a Relocation Response message that carries such information is sent to the target SGSN.
Step 606: The target SGSN decides whether to set up a data forwarding bearer to the target SGW by identifying the user-plane resources allocated for data forwarding in the previous step and taking account of one or any combination of the factors: indirect data forwarding, direct data forwarding, configuration data on the SGSN, operator policies, and whether the SGW changes.
Steps 607-613 are the same as steps 307-313 in the embodiment above.

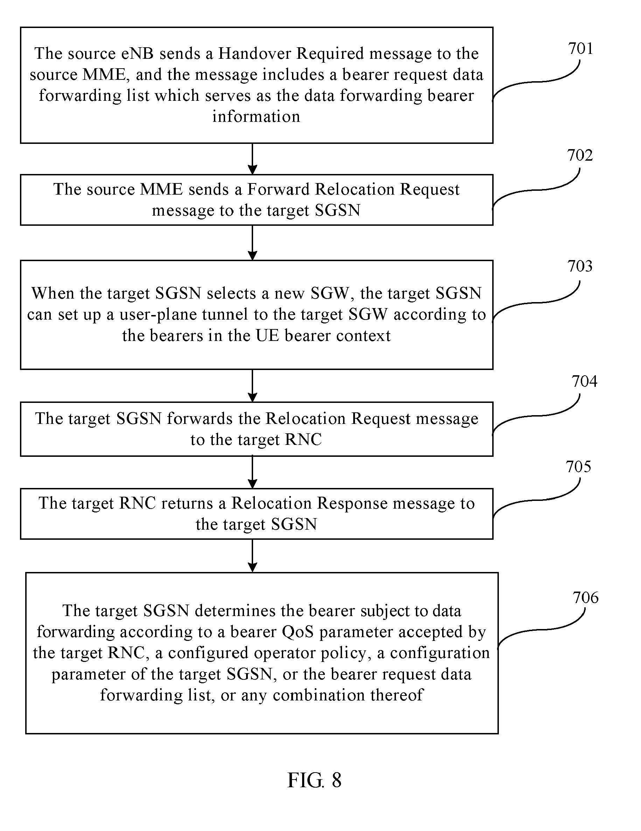

In the foregoing embodiment, the target RNC allocates dedicated user-plane resources for data forwarding. In another embodiment, the target RNC may allocate no dedicated user-plane resources for data forwarding, and the target SGSN decides which bearer is subject to data forwarding. FIG. 8 is a flowchart of handing over a UE from an LTE to a UMTS in the fifth embodiment of the present invention. As shown in FIG. 8, the flowchart includes the following steps:
Step 701: This step is the same as step 601 in the embodiment above.
Step 702: The source MME sends a Forward Relocation Request message(Forwarding Relocation Request) to the target SGSN. The message carries the bearer request data forwarding list. The bearer suggested subject to data forwarding may be indicated in a new message added in existing signaling, a parameter in an existing message, or a field in such a parameter, or in other ways(including by using different messages or signaling).
Steps 703-704 are the same as steps 303-304 in the embodiment above.
Step 705: The target RNC returns a Relocation Response message to the target SGSN. The message does not carry the data forwarding bearer information.
Step 706: The target SGSN decides which bearer is subject to data forwarding according to one or any combination of a bearer QoS parameter accepted by the target RNC,a configured operator policy, a configuration parameter of the target SGSN, and the bearer request data forwarding list. The target SGSN decides whether to set up a data forwarding bearer to the target SGW by taking account of indirect data forwarding, direct data forwarding and/or whether the SGW changes.
Steps 707-713 in this embodiment are the same as steps 307-313 in the embodiment above.

In the embodiments where the UE is handed over from the LTE to the UMTS, the source eNB generates suggested data forwarding bearer information, and then sets the information into a source-to-target transparent container or an independent parameter. In another embodiment, the source MME generates the suggested data forwarding bearer information.

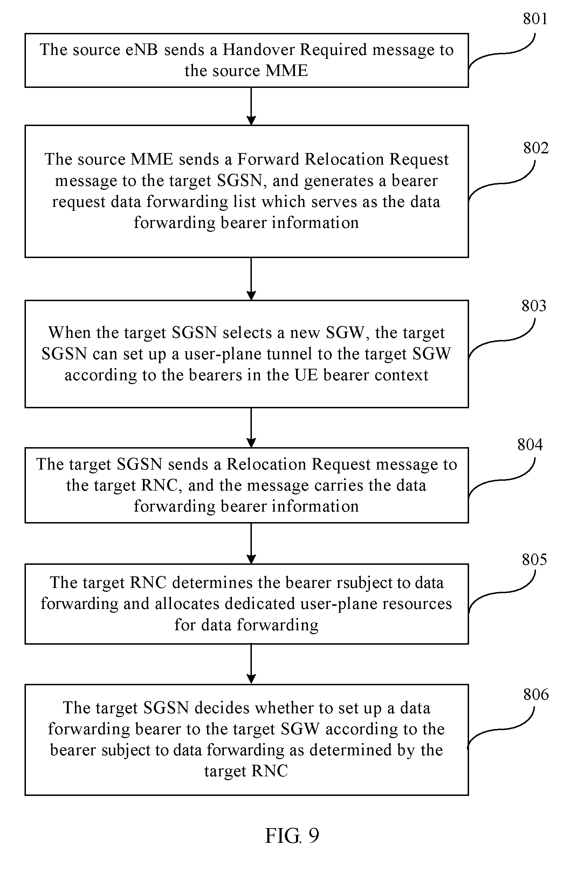

FIG. 9 is a flowchart of handing over a UE from an LTE to a UMTS in the sixth embodiment of the present invention. As shown in FIG. 9, the flowchart includes the following steps:
Step 801: The source eNB sends a Handover Required(Handover Required) message to the source MME. The message may carry parameters such as source-to-target transparent container(Source To Target Transparent container) and target ID(Target ID).
Step 802: The source MME generates data forwarding bearer information according to one or any combination of a bearer QoS parameter, a configured operator policy, a configuration parameter of the source MME, and the bearer request data forwarding list. The data forwarding bearer information suggests which bearer is subject to data forwarding. The data forwarding bearer information may include a bearer request data forwarding list, which comes in two forms: (1) the bearer request data forwarding list includes bearer IDs of all bearers, and a forwarding indication for each bearer indicating whether the bearer is suggested subject to data forwarding; and (2) the bearer request data forwarding list includes only the bearer IDs of the bearers suggested subject to data forwarding. When sending the Relocation Request message to the target SGSN, the source MME sends the data forwarding bearer information. The bearer suggested subject to data forwarding may be indicated in a new message added in existing signaling, a parameter in an existing message, or a field in such a parameter, or in other ways(including by using different messages or signaling).
Step 803: This step is the same as step 303 in the embodiment above.
Step 804: The target SGSN sends a Relocation Request message to the target RNC. The message carries data forwarding bearer information, and the information may exist in these forms: (1) a request forwarding indication is set in the RABs To Be Setup List, where the request forwarding indication for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer IDs of the bearers suggested subject to data forwarding. The bearer suggested subject to data forwarding may be indicated in a new message added in existing signaling, a parameter in an existing message, or a field in such a parameter, or in other ways( including by using different messages or signaling).
Step 805: The target RNC determines the bearer subj ect to data forwarding according to the data forwarding bearer information, and allocates dedicated user-plane resources for data forwarding. Specifically, the parameters such as Iu Transport Association and Transport Layer Address that are dedicated to data forwarding are added in the RAB Setup List for data forwarding, and a Relocation Response message that carries such information is sent to the target SGSN.
Step 806: The target SGSN decides whether to set up a data forwarding bearer to the target SGW by identifying the user-plane resources allocated for data forwarding in the previous step and taking account of one or any combination of the factors: indirect data forwarding, direct data forwarding, operator policies, configuration data, and whether the SGW changes.
Steps 807-813 are the same as steps 307-313 in the embodiment above.

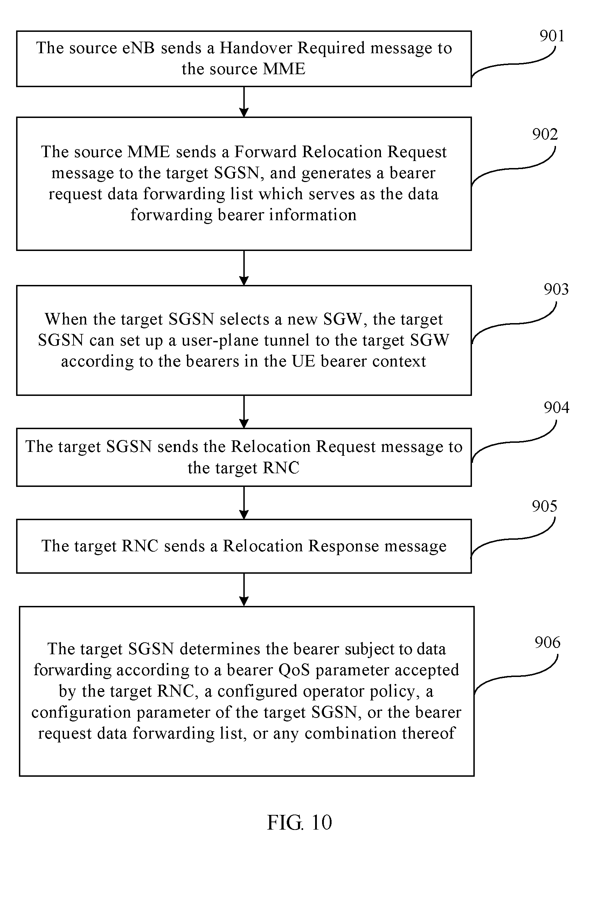

In the foregoing embodiment, the target RNC allocates dedicated user-plane resources for data forwarding. In another embodiment, the target RNC may allocate no dedicated user-plane resources for data forwarding, and the target SGSN decides which bearers are subject to data forwarding. FIG. 10 is a flowchart of handing over a UE from an LTE to a UMTS in the seventh embodiment of the present invention. As shown in FIG. 10, the flowchart includes the following steps:
Step 901: This step is the same as step 801 in the embodiment above.
Step 902: This step is the same as step 802 in the embodiment above.
Steps 903-904 are the same as steps 303-304 in the embodiment above.
Step 905: The target RNC returns a Relocation Response message to the target SGSN. The message does not carry the data forwarding bearer information.
Step 906: The target SGSN decides which bearer is subject to data forwarding according to one or any combination of a bearer QoS parameter accepted by the target RNC,a configured operator policy, a configuration parameter of the target SGSN, and the bearer request data forwarding list. The target SGSN decides whether to set up a data forwarding bearer to the target SGW by taking account of indirect data forwarding, direct data forwarding and/or whether the SGW changes.
Steps 907-913 in this embodiment are the same as steps 307-313 in the embodiment above.

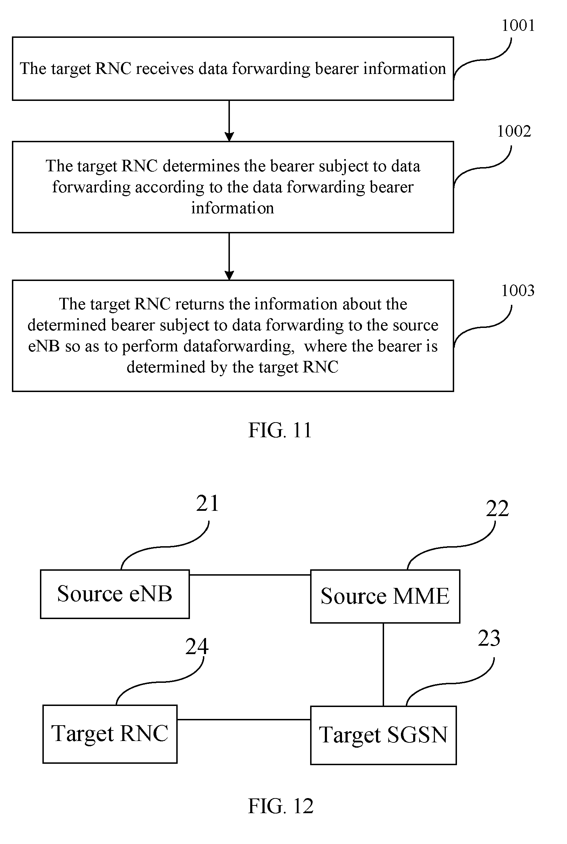

Another method for data forwarding processing during handover is provided in an embodiment of the present invention. FIG. 11 is a flowchart of a method for data forwarding processing during handover in the third embodiment of the present invention. As shown in FIG. 11, the method includes the following steps:
Step 1001: The target RNC receives a Relocation Request message that carries data forwarding bearer information from the target SGSN. In this embodiment, the target SGSN suggests which bearer is subject to data forwarding. Specifically, the target SGSN generates the data forwarding bearer information according to one or any combination of a bearer QoS parameter, a configured operator policy, and a configuration parameter. The data forwarding bearer information may exist in these forms: (1) a request forwarding indication is set in the RABs To Be Setup List, where the request forwarding indication for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer IDs of the bearers suggested subject to data forwarding.
Step 1002: The target RNC determines the bearer subject to data forwarding according to the data forwarding bearer information. In this step, the target RNC may allocate user-plane resources for data forwarding when determining the bearer subject to data forwarding according to the data forwarding bearer information.
Step 1003: The target RNC returns the information about the determined bearer subject to data forwarding to the source eNB, and forwards the data during handover.

Through the method for data forwarding processing during handover in this embodiment, the target SGSN decides to generate a suggestion about which bearer is subject to data forwarding according to one or a combination of parameters. Therefore, the target RNC can determine the bearer subject to data forwarding more accurately, and therefore the resource waste is reduced.

Another method for data forwarding processing during handover is provided in an embodiment of the present invention. When the target RNC allocates no dedicated resources for data forwarding, the target SGSN may determine the bearer subject to data forwarding according to one or any combination of a bearer parameter such as QoS and service type accepted by the target RNC, a configured operator policy, and a configuration parameter. Afterward, the target SGSN returns information about the determined bearer subject to data forwarding to a source eNB and forwards the data during handover. In this embodiment, when determining the bearer subject to data forwarding, the SGSN takes account of multiple factors, therefore reducing the waste of resources.

A system for implementing the foregoing method is provided in an embodiment of the present invention. FIG. 12 shows a structure of a system for data forwarding processing during handover in the first embodiment of the present invention. As shown in FIG. 12, the system includes: a source MME 22, configured to send data forwarding bearer information; a target SGSN 23 or a target RNC 24, configured to determine the bearer subject to data forwarding according to the received data forwarding bearer information; and a source eNB 21, configured to receive information about the determined bearer subject to data forwarding, so as to perform data forwarding.

Through the system for data forwarding processing during handover in this embodiment, the network element in the source system provides the data forwarding bearer information suggesting which bearer is subject to data forwarding, and the target RNC or target SGSN determines the bearer subject to data forwarding according to the suggestion. Therefore, data forwarding on unnecessary bearers is avoided, and therefore the resource waste is reduced.

In the foregoing embodiment, the target RNC is further configured to allocate dedicated user-plane resources for data forwarding. Therefore, the data forwarded by the source eNB and the downlink data sent by the target SGSN or target SGW use different user-plane resources, which facilitates the sorting performed by the target RNC.

In addition, the target RNC is further configured to generate a RABs Forwarding List that includes the information about the bearer subject to data forwarding, and send the list to the target SGSN.

The target SGSN is further configured to send the RABs Forwarding List to the source MME or target SGW.

When the data forwarding bearer information is a bearer request data forwarding list, the source eNB or source MME is configured to generate the bearer request data forwarding list; if the source eNB generates the bearer request data forwarding list, the system further includes a module for sending the bearer request data forwarding list to the source MME.

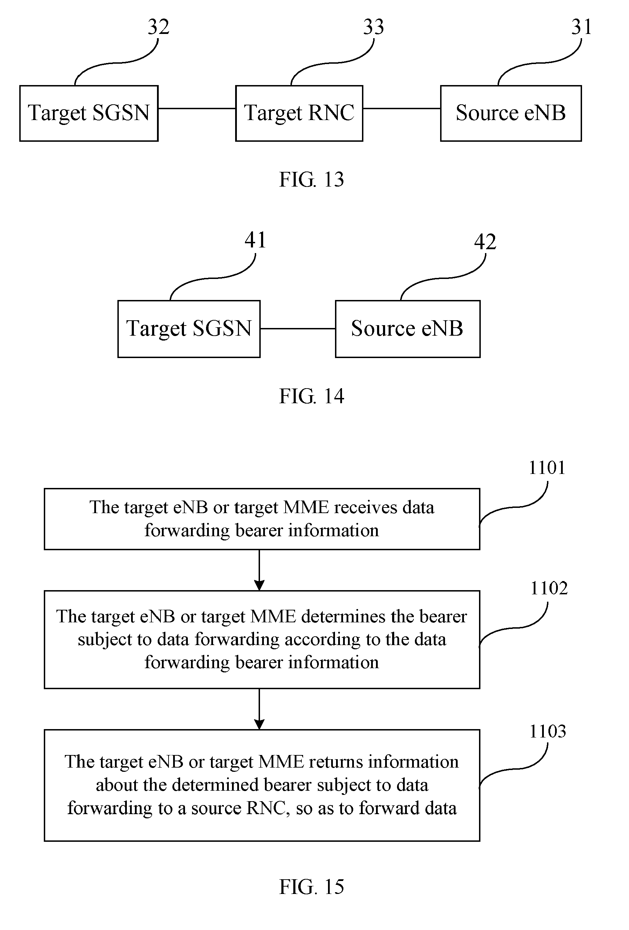

Another system for data forwarding processing during handover is provided in an embodiment of the present invention. As shown in FIG. 13, the system includes: a target SGSN 32, configured to send data forwarding bearer information; a target RNC 33, configured to determine the bearer subject to data forwarding according to the data forwarding bearer information; and a source eNB 31, configured to receive information about the determined bearer subject to data forwarding, so as to perform data forwarding, where the bearer is determined by the target RNC.

In this embodiment, the target SGSN generates the data forwarding bearer information suggesting which bearer is subject to data forwarding, and the target SGSN sends the information to the target RNC. The target RNC determines the bearer subject to data forwarding according to the suggestion. Therefore, data forwarding on unnecessary bearers is avoided, and therefore the resource waste is reduced.

Another system for data forwarding processing during handover is provided in an embodiment of the present invention. As shown in FIG. 14, the system includes: a target SGSN 41, configured to determine a bearer subject to data forwarding according to a bearer parameter such as QoS and service type accepted by the target RNC, a configured operator policy and/or a configuration parameter; and a source eNB 42, configured to receive information about the determined bearer subject to data forwarding, so as to perform data forwarding.

Through the system for data forwarding processing during handover in this embodiment, the target SGSN determines the bearer subject to data forwarding according to a combination of conditions. Therefore, data forwarding on unnecessary bearers is avoided, and the waste of channel resources is reduced.

The methods and the systems above are solutions applicable to the scenario of handing over the UE from the LTE to the UMTS. The following embodiment deals with the scenario of handing over the UE from the UMTS to the LTE.

FIG. 15 is a flowchart of a method for data forwarding processing during handover in the fourth embodiment of the present invention. As shown in FIG. 15, the method includes the following steps:
Step 1101: The target eNB or target MME receives a Relocation Request message that carries data forwarding bearer information from a source SGSN. In this embodiment, when the UE is handed over from the UMTS to the LTE, the data forwarding bearer information may be carried in a new message added in existing signaling, a parameter in the existing message, or a certain field in such a parameter. Specifically, the data forwarding bearer information may be generated by the source RNC or source SGSN. If the data forwarding bearer information is generated by the source RNC, the data forwarding bearer information may be carried in the source-to-target transparent container, or carried as an independent parameter in the Handover Required message. For example, a bearers request data forwarding list is generated, and this list may store only the bearer subject to data forwarding, or store all bearers. A forwarding indication is set for each bearer subject to data forwarding.
Step 1102: The target eNB or target MME determines the bearer subject to data forwarding. If the target eNB determines the bearer $subject to data forwarding, the target eNB may allocate dedicated user-plane resources for data forwarding. When determining the bearer subj ect to data forwarding, the target MME may refer to the bearer parameters such as QoS and service type accepted by the target eNB, a configured operator policy, configuration information of the target MME, or data forwarding bearer information, or any combination thereof.
Step 1103: Return information about the determined bearer to the source RNC and forward data during handover. In this step, the target eNB or target MME determines the bearer subject to data forwarding, and then returns the information about the bearer to the source RNC, and the source RNC initiates data forwarding during handover.

In the method for data forwarding processing during handover in this embodiment, the source RNC or source SGSN sends a suggestion about the bearer subject to data forwarding to the target eNB or target MME by adding the suggestion into an independent parameter or a field in the existing parameter. The target eNB or target MME determines the bearer subject to data forwarding by referring to the suggestion. In this way, the data forwarding tunnel is set up for only the bearer subject to data forwarding, and therefore the resource waste is reduced.

The technical solution under the present invention is described below with reference to embodiments. The description is based on the following assumptions: the UE is handed over from the UMTS to the LTE, the source RNC can add the data forwarding bearer information into a source-to-target transparent container, and the target MME can determine which bearer is subject to data forwarding, or the target MME cannot determine which bearer is subj ect to data forwarding.

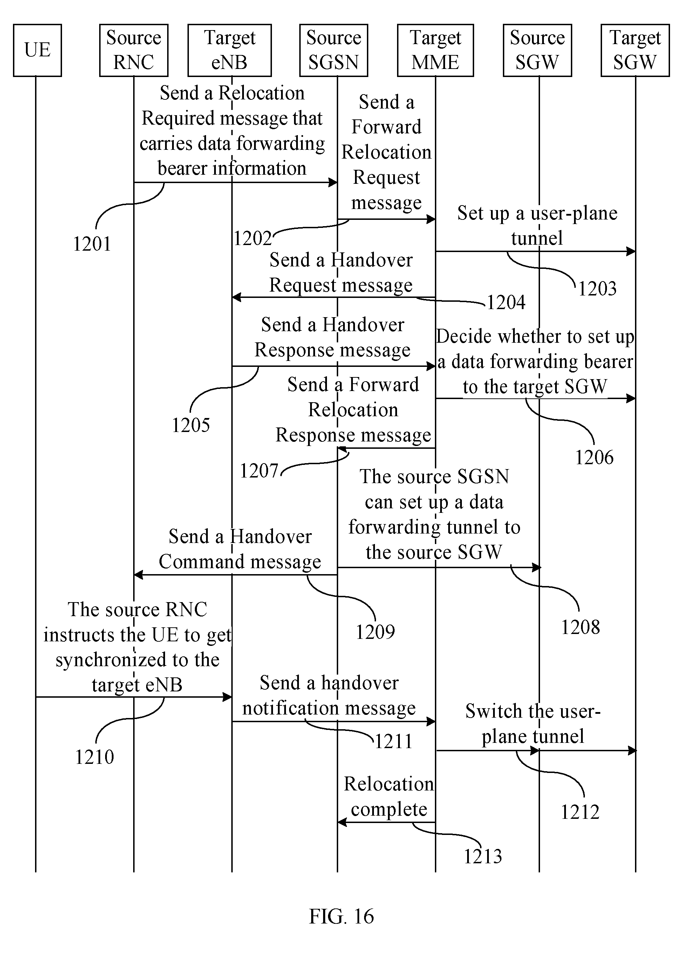

FIG. 16 is a flowchart of handing over a UE from a UMTS to an LTE in the first embodiment of the present invention. As shown in FIG. 16, the flowchart includes the following steps:
Step 1201: The source RNC sends a Relocation Required message to the source SGSN. The message may carry parameters such as source-to-target transparent container and target ID. The source-to-target transparent container constructed by the source RNC is a transparent container from a source eNB to a target eNB, and only the target eNB can parse the content in it. Transparent transmission is performed between the source SGSN and the target MME. The data forwarding bearer information added in the transparent container from the source eNB to the target eNB in this step may be (1) an E-RABs Request Data Forwarding List, which includes bearer identifiers (E-RAB-id) of all bearers and a forwarding indication for each bearer indicating whether the bearer is suggested subject to data forwarding; or (2) an E-RABs Request Data Forwarding List, which includes only the E-RAB-id of the bearer suggested subject to data forwarding.
Step 1202: The source SGSN sends a Forward Relocation Request message to the target MME. The message may carry parameters such as source-to-target transparent container, target ID, UE bearer context, and UE mobility management context. The source-to-target transparent container in this step also includes the data forwarding bearer information.
Step 1203: When the MME selects a new SGW, the target MME can set up a user-plane tunnel to the target SGW according to the bearers in the UE bearer context, and the target SGW allocates user-plane resources to the bearers.
Step 1204: The target MME forwards the Handover Request message to the target eNB. The message may carry parameters such as E-RAB Setup List and source-to-target transparent container.
Step 1205: The target eNB returns a Handover Response message to the target MME. The message does not carry the data forwarding bearer information.
Step 1206: The target MME decides which bearer is subj ect to data forwarding according to a bearer parameter such as QoS and service type accepted by the target eNB, a configured operator policy, or a configuration parameter of the target MME, or any combination thereof. The target MME may decide whether to set up a data forwarding bearer to the target SGW by taking account of indirect data forwarding, direct data forwarding and/or whether the SGW changes.
Step 1207: The target MME sends a Forward Relocation Response message to the source SGSN. If direct data forwarding (namely, the data is forwarded from the source RNC to the target eNB) is performed, or if the SGW remains unchanged, the message may carry the information such as user-plane resources allocated by the target eNB in step 1305. If indirect data forwarding is performed and the SGW changes, the message may carry the information such as user-plane resources allocated by the target SGW in step 1206.
Step 1208: If indirect data forwarding is performed, the source SGSN may set up a data forwarding tunnel to the source SGW through a message that carries the data forwarding user-plane resources mentioned in step 1207.
Step 1209: The source SGSN sends a Handover Command message to the source RNC. The Handover Command may carry the data forwarding user-plane resources mentioned in step 1208, and the source RNC may begin direct or indirect downlink data forwarding after receiving the Handover Command message.
Step 1210: The source RNC instructs the UE to get synchronized to the target eNB.
Step 1211: After detecting that the UE is synchronized, the target eNB sends a Relocation Complete message to the target MME.
Step 1212: The target MME switches the uplink and downlink user-plane tunnels to the target RNC.
Step 1213: The target MME notifies the source SGSN that the relocation is complete.

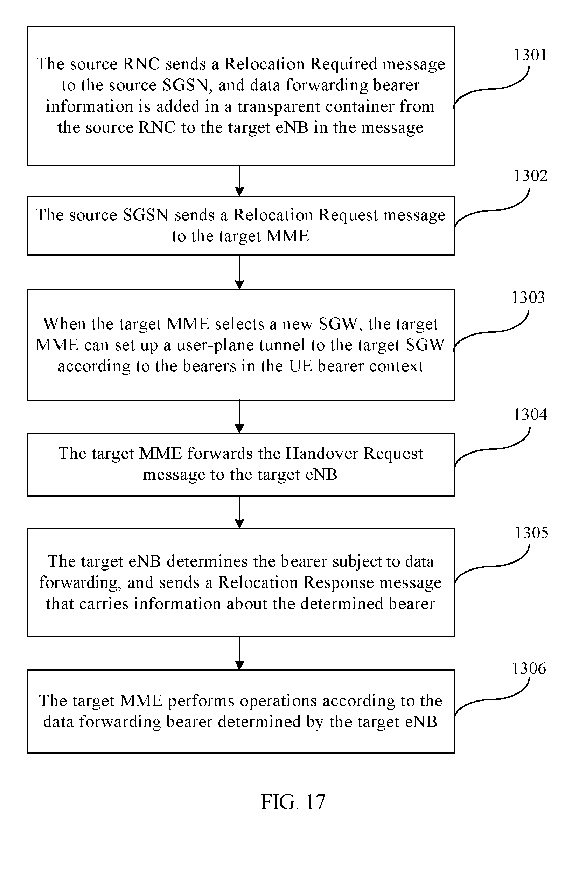

The following embodiment deals with the scenario where the target MME cannot determine which bearer is subject to data forwarding. FIG. 17 is a flowchart of handing over a UE from a UMTS to an LTE in the second embodiment of the present invention. As shown in FIG. 17, the flowchart includes the following steps:
Steps 1301-1304 are the same as steps 1201-1204 in the embodiment above.
Step 1305: The target eNB allocates no dedicated user-plane resources for data forwarding. That is, the data forwarded by the source RNC and the downlink data sent by the target SGW or target MME use the same user-plane resources. In the E-RAB Setup List in the Handover Response message, a forwarding indication may be added for each bearer; or an E-RABs Forwarding List that includes all bearers is added, and this list further includes a forwarding indication for each bearer; or an E-RABs Forwarding List that includes only the determined bearer subject to data forwarding is added. The bearer subject to data forwarding may be indicated in a new message, a parameter in an existing message, or a field in such a parameter, or in other ways, including by using different messages or signaling.
Step 1306: The target MME may decide the data forwarding bearer according to the data forwarding bearer determined by the target eNB in step 1305, a configuration parameter, or operator policy, or a bearer parameter such as QoS and service type determined by the target eNB, or any combination thereof. If direct data forwarding is performed or the SGW remains unchanged, the target MME may send the downlink user-plane resources, which are allocated by the target eNB in step 1305, to the source SGSN in step 1307. If indirect data forwarding is performed and the SGW changes, the target MME may send the downlink user-plane resources, which are allocated in step 1305, to the target SGW in step 1306 with a view to setting up an indirect data forwarding tunnel, and send the resources to the source SGSN in step 1307.

For details about steps 1307-1313, see steps 1207-1213 in the embodiment above.

In the three embodiments above, the source RNC adds the data forwarding bearer information into a source-to-target transparent container. In another embodiment, the data forwarding bearer information may be set as an independent parameter in a Relocation Required message sent by the source RNC to the source SGSN. In this case, the target eNB may allocate dedicated user-plane resources for data forwarding, or allocate no dedicated user-plane resources for data forwarding.

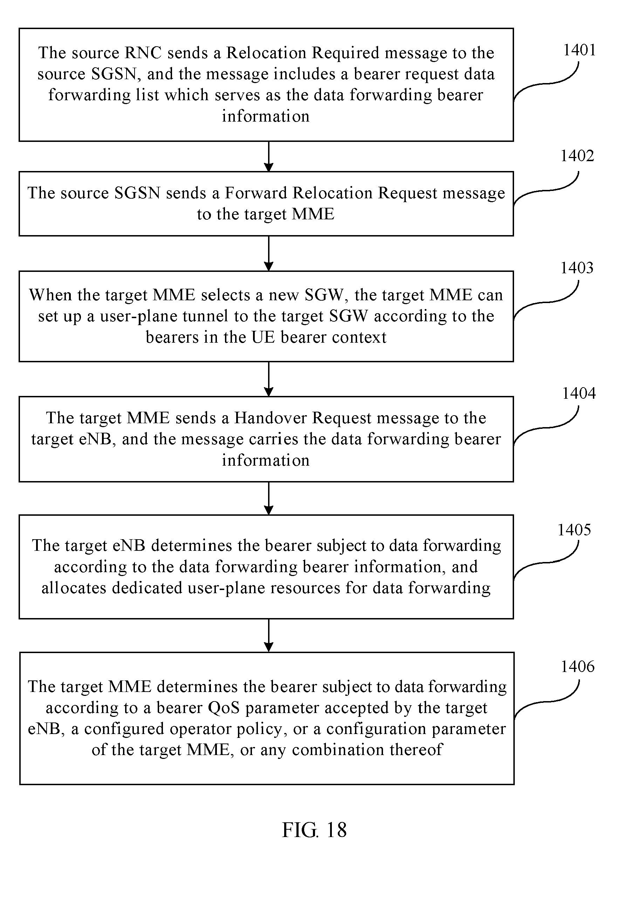

FIG. 18 is a flowchart of handing over a UE from a UMTS to an LTE in the third embodiment of the present invention. As shown in FIG. 18, the flowchart includes the following steps:
Step 1401: The source RNC sends a Relocation Required(Relocationg Required) message to the source SGSN. The message carries parameters such as source-to-target transparent container(Source To Target Transparent container), target ID(Target ID), and bearer request data forwarding list(Bearer Request data forwarding List). As data forwarding bearer information, the bearer request data forwarding list (Bearer Request data forwarding List)may include: (1) bearer IDs of all bearers, and a forwarding indication for each bearer indicating whether the bearer is suggested subject to data forwarding; or (2) only the bearer ID of the bearer suggested subject to data forwarding.
Step 1402: The source SGSN sends a Forward Relocation Request(Forwarding Relocation Request) message to the target MME. The message may carry the bearer request data forwarding list(Bearer Request data forwarding List). The bearer suggested subject to data forwarding may be indicated in a new message added in existing signaling, a parameter in an existing message, or fields in such a parameter, or in other ways(including by using different messages or signaling).
Step 1403: This step is the same as step 1203 in the embodiment above.
Step 1404: The target MME sends a Handover Request message to the target eNB. The message carries data forwarding bearer information, and the information may exist in these forms: (1) a request forwarding indication is set in the E-RABs To Be Setup List(E-RABs To Be Setup List ), where the request forwarding indication (Request Forwarding indication)for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearers request data forwarding list includes only the bearer ID of the bearer suggested subject to data forwarding. The bearer suggested subject to data forwarding may be indicated in a new message added in existing signaling, a parameter in an existing message, or fields in such a parameter, or in other ways( including by using different messages or signaling).
Step 1405: The target eNB determines the bearer subject to data forwarding according to the data forwarding bearer information, allocates dedicated user-plane resources for data forwarding, and then sends a Handover Response message that carries the foregoing information to the target MME.
Step 1406: The target MME decides whether to set up a data forwarding bearer to the target SGW by identifying the user-plane resources allocated for data forwarding in the previous step and taking account of one or any combination of the factors: indirect data forwarding, direct data forwarding, configuration data, operator policies, and whether the SGW changes.
Steps 1407-1413 are the same as steps 1207-1213 in the embodiment above.

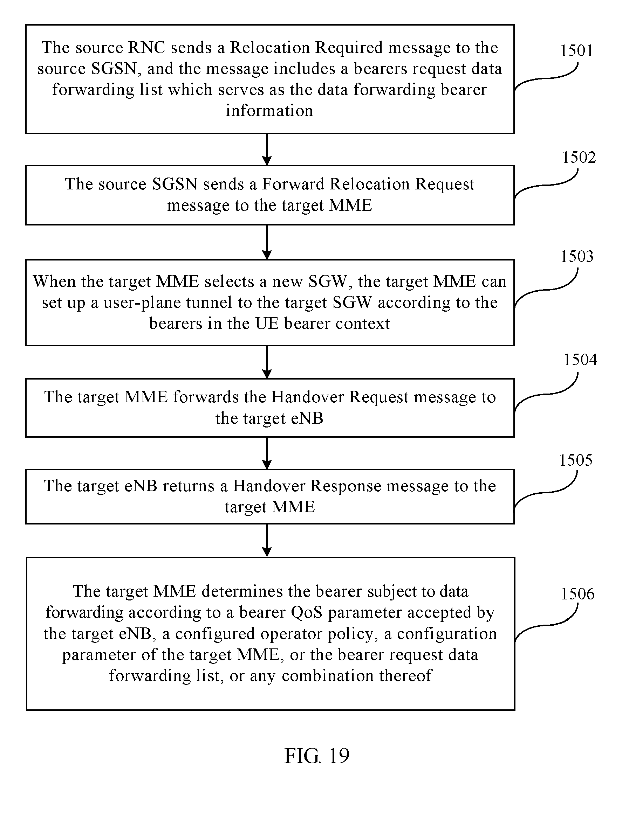

In the foregoing embodiment, the target eNB allocates dedicated user-plane resources for data forwarding. In another embodiment, the target eNB may allocate no dedicated user-plane resources for data forwarding, and the target MME decides which bearer is subject to data forwarding. FIG. 19 is a flowchart of handing over a UE from a UMTS to an LTE in the fourth embodiment of the present invention. As shown in FIG. 19, the flowchart includes the following steps:
Steps 1501-1504 are the same as steps 1401-1404 in the embodiment above.
Step 1505: The target eNB returns a Handover Response message to the target MME. The message does not carry the data forwarding bearer information.
Step 1506: The target MME decides which bearer is subject to data forwarding according to bearer parameters such as QoS and service type accepted by the target eNB, a configured operator policy, a configuration parameter of the target MME, or the bearer request data forwarding list, or any combination thereof. The target MME decides whether to set up a data forwarding bearer to the target SGW by taking account of indirect data forwarding, direct data forwarding and/or whether the SGW changes.
Steps 1507-1513 in this embodiment are the same as steps 1207-1213 in the embodiment above.

In the embodiments where the UE is handed over from the UMTS to the LTE, the source RNC generates suggested data forwarding bearer information, and then sets the information into a source-to-target transparent container or an independent parameter. In another embodiment, the source SGSN generates the suggested data forwarding bearer information.

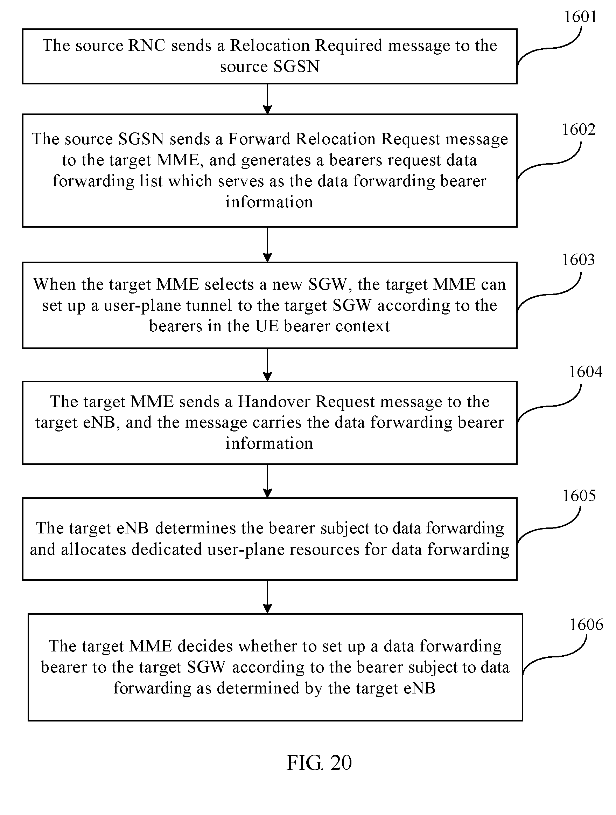

FIG. 20 is a flowchart of handing over a UE from a UMTS to an LTE in the fifth embodiment of the present invention. As shown in FIG. 20, the flowchart includes the following steps:
Step 1601: The source RNC sends a Relocation Required (Relocation Required)message to the source SGSN. The message carries parameters such as source-to-target transparent container(Source To Target Transparent container), and target ID(Target ID).
Step 1602: The source SGSN generates data forwarding bearer information according to bearer parameters such as QoS and service type, a configured operator policy, a configuration parameter, or the bearer request data forwarding list, or any combination thereof. The data forwarding bearer information indicates which bearer is subject to data forwarding. The data forwarding bearer information may include a bearer request data forwarding list. The bearer request data forwarding list includes: (1) bearer IDs of all bearers, and a forwarding indication for each bearer indicating whether the bearer is suggested subject to data forwarding; or (2) only the bearer ID of the bearer suggested subject to data forwarding. When sending the Forward Relocation Request message to the target MME, the source SGSN forwards the data forwarding bearer information. The bearer suggested subject to data forwarding may be indicated in a new message added in existing signaling, a parameter in an existing message, or a fiels in such a parameter, or in other ways(including by using different messages or signaling).
Step 1603: This step is the same as step 1203 in the embodiment above.
Step 1604: The target MME sends a Handover Request message to the target eNB. The message carries data forwarding bearer information, and the information may exist in these forms: (1) a request forwarding indication is set in the E-RABs To Be Setup List(E-RABs To Be Setup List ), where the request forwarding indication(Request Forwarding indication) for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer ID of the bearer suggested subject to data forwarding. The bearer suggested subject to data forwarding may be indicated in a new message added in existing signaling, a parameter in an existing message, or a field in such a parameter, or in other ways( including by using different messages or signaling).
Step 1605: The target eNB determines the bearer subject to data forwarding according to the data forwarding bearer information, allocates dedicated user-plane resources for data forwarding, and then sends a Handover Response message that carries the foregoing information to the target MME.
Step 1606: The target MME decides whether to set up a data forwarding bearer to the target SGW by identifying the user-plane resources allocated for data forwarding in the previous step, operator policies, configuration parameters, and parameters such as QoS and service type of the data forwarding bearer determined by the target eNB, and by taking account of one or any combination of the factors: indirect data forwarding, direct data forwarding, and whether the SGW changes.
Steps 1607-1613 are the same as steps 1207-1213 in the embodiment above.

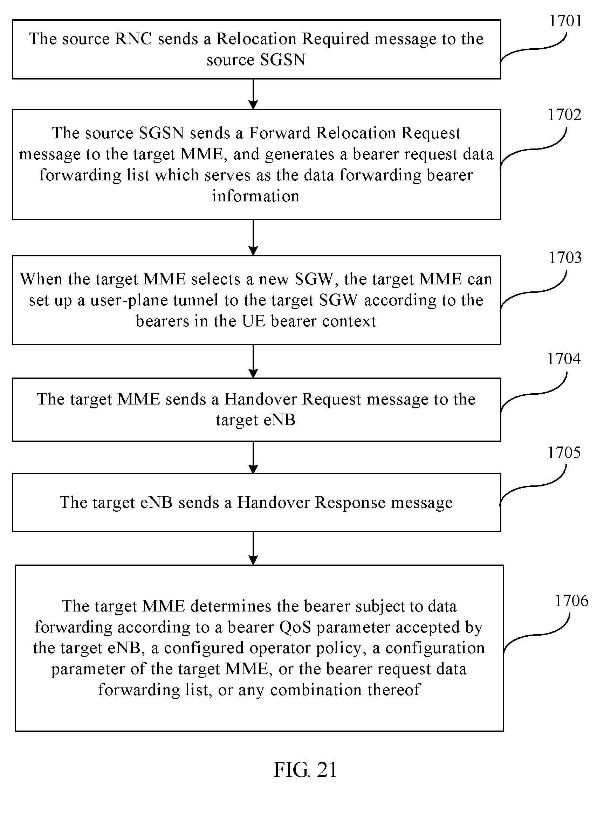

In the foregoing embodiment, the target eNB allocates dedicated user-plane resources for data forwarding. In another embodiment, the target eNB may allocate no dedicated user-plane resources for data forwarding, and the target MME decides which bearer is subject to data forwarding. FIG. 21 is a flowchart of handing over a UE from a UMTS to an LTE in the sixth embodiment of the present invention. As shown in FIG. 21, the flowchart includes the following steps:
Steps 1701-1703 are the same as steps 1601-1603 in the embodiment above.
Step 1704: The target MME sends a Handover Request(Handover Request) message to the target eNB. The message may carry parameters such as E-RAB Setup List and source-to-target transparent container(Source To Target Transparent container).
Step 1705: The target eNB returns a Handover Response message to the target MME. The message does not carry the data forwarding bearer information.
Step 1706: The target MME decides which bearer is subject to data forwarding according to bearer parameters such as QoS and service type accepted by the target RNC, a configured operator policy, a configuration parameter of the target MME, or the bearer request data forwarding list, or any combination thereof. The target MME may decide whether to set up a data forwarding bearer to the target SGW by taking account of indirect data forwarding, direct data forwarding and/or whether the SGW changes.
Steps 1707-1713 in this embodiment are the same as steps 1207-1213 in the embodiment above.

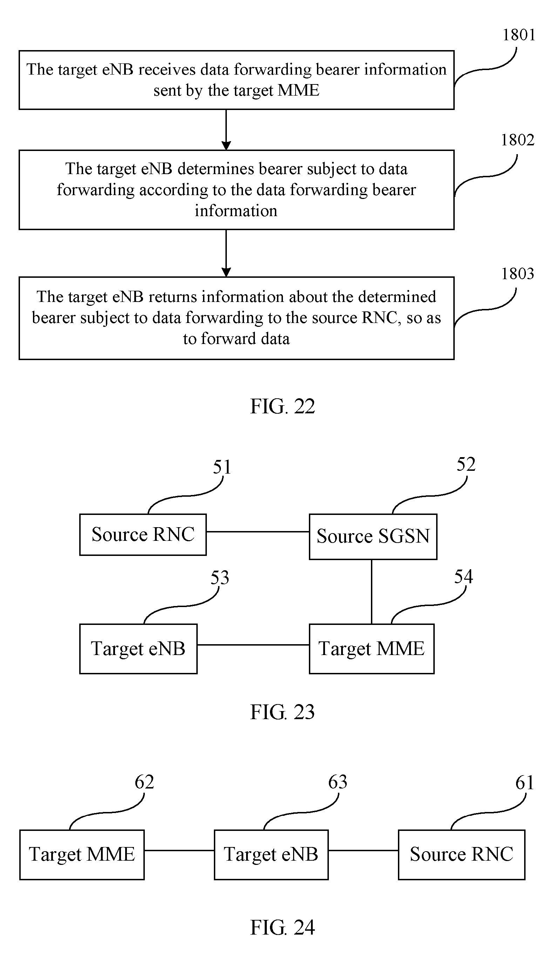

Another method for data forwarding processing during handover is provided in an embodiment of the present invention. FIG. 22 is a flowchart of a method for data forwarding processing during handover in the fifth embodiment of the present invention. As shown in FIG. 22, the method includes the following steps:
Step 1801: The target eNB receives a Handover Request message that carries data forwarding bearer information from the target MME. In this embodiment, the target MME suggests which bearer is subject to data forwarding. Specifically, the target MME generates the data forwarding bearer information according to one or any combination of the bearer parameter such as QoS and service type, configured operator policy, and a configuration parameter. The data forwarding bearer information may exist in these forms: (1) a request forwarding indication is set in the E-RABs To Be Setup List(E-RABs To Be Setup List ), where the request forwarding indication CRequest Forwarding indication)for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer ID of the bearer suggested subject to data forwarding. The data forwarding bearer information is not limited to such forms, and may be carried in an existing parameter, or an extended parameter, or a new parameter.
Step 1802: The target eNB determines the bearer subject to data forwarding according to the data forwarding bearer information. In this step, the target eNB may allocate user-plane resources for data forwarding when determining the bearer subject to data forwarding according to the data forwarding bearer information.
Step 1803: The information about the bearer determined by the target eNB as subject to data forwarding is returned to the source RNC, so as to perform data forwarding during handover. The step of forwarding data is the same as the counterpart in the embodiment above.

Through the method for data forwarding processing during handover in this embodiment, the target MME generates a suggestion about which bearer is subject to data forwarding according to one or a combination of parameters. Therefore, the target eNB can determine the bearer subject to data forwarding more accurately, and therefore the resource waste is reduced.

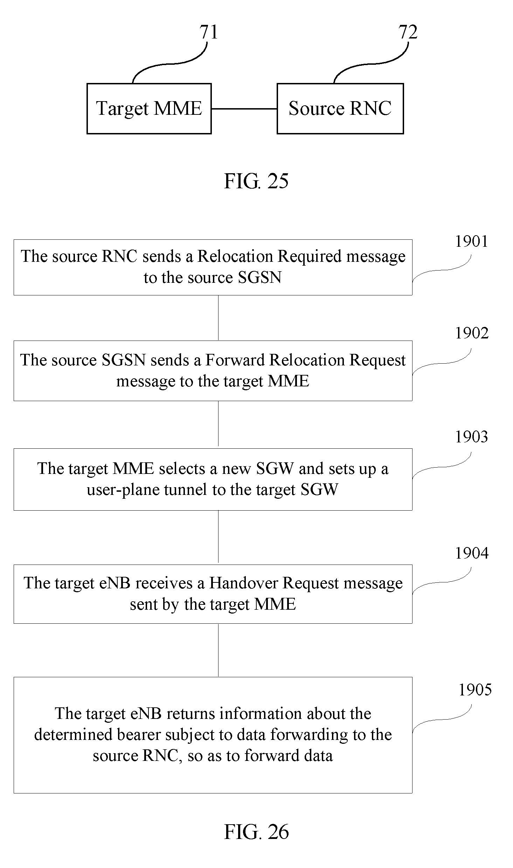

In another embodiment, as shown in FIG. 26, the source RNC suggests which bearers are subject to data forwarding, and adds the suggestion into a transparent container from the source eNB to the target eNB, and the target eNB decides to allocate data forwarding resources to which bearer according to the data forwarding suggestion of the source RNC and the data forwarding suggestion of the target MME, as detailed below:
Step 1901: The source RNC sends a Relocation Required message to the source SGSN. The Relocation Required message carries data forwarding bearer information. The data forwarding bearer information may be a request data forwarding list, and the request data forwarding list may be set in a transparent container from the source eNB to the target eNB.
Step 1902: The source SGSN sends a Forward Relocation Request message to the target MME. The message includes the transparent container from the source eNB to the target eNB.
Step 1903: The target MME selects a target SGW, and sets up a user-plane tunnel to the target SGW according to the bearer information.
Step 1904: The target eNB receives the Handover Request message sent by the target MME. The Handover Request message includes the transparent container from the source eNB to the target eNB.

In the Handover Request message, the target MME may suggest which bearers are subject to data forwarding. Specifically, the target MME generates the data forwarding bearer information according to one or any combination of the bearer parameter such as QoS and service type, a configured operator policy, and a configuration parameter. The data forwarding bearer information may exist in these forms: (1) a request forwarding indication is set in the E-RABs To Be Setup List(E-RABs To Be Setup List ), where the request forwarding indication (Request Forwarding indication) for each bearer indicates whether the bearer is subject to data forwarding; (2) the bearer request data forwarding list includes bearer IDs of all bearers, and a forwarding indication for each bearer indicating whether the bearer is suggested subject to data forwarding; and (3) the bearer request data forwarding list includes only the bearer ID of the bearer suggested subject to data forwarding. The data forwarding bearer information is not limited to such forms, and may be carried in an existing parameter, or an extended parameter, or a new parameter.

The target eNB decides to allocate data forwarding resources to which bearer according to the data forwarding suggestion of the source RNC and the data forwarding suggestion of the target MME. The data forwarding suggestion of the source RNC is the request data forwarding list, and the data forwarding suggestion of the target MME is the suggestion in the Handover Request message as regards which bearer is subject to data forwarding.

Step 1905: The target eNB returns information to the source RNC, and the information indicates the bearer determined by the target eNB as subject to data forwarding, so as to perform data forwarding. The step of forwarding data is the same as the counterpart in the embodiment above.

Another method for data forwarding processing during handover is provided in an embodiment of the present invention. In this embodiment, the target MME determines a bearer or bearers subj ect to data forwarding according to a bearer parameter such as QoS and service type accepted by the target RNC, configured operator policy and/or a configuration parameter. Afterward, the target MME returns information about the determined bearer subject to data forwarding to the source RNC and forwards the data during handover. In this embodiment, when determining the bearer subject to data forwarding, the target MME takes account of multiple factors, therefore reducing the waste of resources.

Another system for implementing the foregoing method is provided in an embodiment of the present invention. FIG 23 shows a structure of a system for data forwarding processing during handover in the fourth embodiment of the present invention. As shown in FIG. 23, the system includes: a source SGSN 52, configured to send data forwarding bearer information; a target eNB 53 or a target MME 54, configured to determine bearer subject to data forwarding according to the data forwarding bearer information; and a source RNC 51, configured to receive information about the determined bearer subject to data forwarding, so as to perform data forwarding.

Through the system for data forwarding processing during handover in this embodiment, the network element in the source system provides the data forwarding bearer information suggesting which bearer is subject to data forwarding, and the target eNB or target MME determines the bearer subject to data forwarding according to the suggestion. Therefore, data forwarding on unnecessary bearers is avoided, and therefore the resource waste is reduced.

In the foregoing embodiment, the target eNB is further configured to allocate dedicated user-plane resources for data forwarding. Therefore, the data forwarded by the source RNC and the downlink data sent by the target MME or target SGW use different user-plane resources, which facilitates the sorting of the data to be forwarded.

In addition, the target eNB is further configured to generate a RABs Forwarding List that includes the information about the bearers subject to data forwarding, and send the list to the target MME.

The target MME is further configured to send the RABs Forwarding List to the source SGSN or target SGW.

When the data forwarding bearer information is a bearer request data forwarding list, the source RNC or source MME is configured to generate the bearer request data forwarding list; if the source RNC generates the bearer request data forwarding list, the system further includes a module for sending the bearer request data forwarding list to the source MME.

Another system for data forwarding processing during handover is provided in an embodiment of the present invention. As shown in FIG. 24, the system includes: a target MME 62, configured to send data forwarding bearer information; a target eNB 63, configured to determine bearer subject to data forwarding according to the data forwarding bearer information; and a source RNC 61, configured to receive information about the determined bearer subject to data forwarding, so as to forward data, where the bearer is determined by the target eNB 63.

In this embodiment, the target MME generates the data forwarding bearer information suggesting which bearer is subject to data forwarding, and the target MME sends the information to the target eNB. The target eNB determines the bearer subject to data forwarding according to the suggestion. Therefore, data forwarding on unnecessary bearers is avoided, and the waste of channel resources is reduced.

Another system for data forwarding processing during handover is provided in an embodiment of the present invention. As shown in FIG. 25, the system includes: a target MME 71, configured to determine bearer subject to data forwarding according to bearer parameters (such as QoS and service type) accepted by a target eNB, a configured operator policy and/or a configuration parameter; and a source RNC 72, configured to receive information about the determined bearer subject to data forwarding, so as to forward data.

Through the system for data forwarding processing during handover in this embodiment, the target MME determines the bearer subject to data forwarding according to a combination of conditions. Therefore, data forwarding on unnecessary bearers is avoided, and the waste of channel resources is reduced.

Through the method, apparatus, and system for data forwarding processing during handover in the embodiments of the present invention, the bearer subject to data forwarding is suggested beforehand or determined according to parameters. Therefore, data forwarding on unnecessary bearers is avoided, and the waste of channel resources is reduced.

Finally, it should be noted that the above embodiments are provided for merely describing the technical solution of the present invention, but not intended to limit the present invention. It is apparent that persons skilled in the art can make various modifications and variations to the invention without departing from the spirit and scope of the invention. The invention is intended to cover the modifications and variations provided that they fall within the scope of protection defined by the following claims or their equivalents.

## Claims

1. A method for data forwarding processing during handover, comprising:
receiving data forwarding bearer information wherein the data forwarding bearer information suggests whether a bearer is subject to data forwarding;
determining a bearer subj ect to data forwarding according to the data forwarding bearer information; and
returning bearer information about the bearer subject to data forwarding so as to perform data forwarding.

2. The method according to claim 1, wherein:
the data forwarding bearer information comprises a bearer request data forwarding list wherein the bearer request data forwarding list comprises a Radio Access Bearer (RAB) Identifier (ID) and an indication suggesting whether the bearer is subject to data forwarding, and the bearer request data forwarding list is carried in a source-to-target transparent container generated by a source evolved NodeB (eNB);
the receiving data forwarding bearer information comprises:
receiving, by a target Radio Network Controller (RNC) or a target Serving GPRS Support Node (SGSN), the source-to-target transparent container sent by the source eNB;
the determining a bearer subject to data forwarding according to the data forwarding bearer information comprises:
determining, by the target RNC or target SGSN, the bearer subject to data forwarding according to the bearer request data forwarding list carried in the source-to-target transparent container.

3. The method according to claim 2, wherein the returning bearer information about the bearer subject to data forwarding comprises:
returning, by the target RNC or target SGSN, a RABs Setup List to the source eNB, wherein the RABs Setup List comprises the information about the bearer subj ect to data forwarding.

4. The method according to claim 1, wherein:
the receiving data forwarding bearer information comprises:
receiving, by a target Radio Network Controller (RNC) or a target Serving GPRS Support Node (SGSN), data forwarding bearer information sent by a source Mobility Management Entity (MME);
wherein the data forwarding bearer information comprises a bearer request data forwarding list or comprises a Radio Access Bearers (RABs) To Be Setup List with a requesting forwarding indication being set, and the bearer request data forwarding list comprises a Radio Access Bearer Identifier (ID) and an indication suggesting whether the bearer is subject to data forwarding;
the data forwarding bearer information is generated by a source evolved NodeB (eNB) and carried in a Handover Required message sent by the source eNB to the source MME,
or
the data forwarding bearer information is generated by the source MME according to a bearer Quality of Service (QoS) parameter, a configured operator policy and/or a configuration parameter.

5. The method according to claim 4, wherein the determining a bearer subject to data forwarding according to the data forwarding bearer information comprises:
receiving, by the target RNC, the bearer request data forwarding list or the RABs To Be Setup List with a requesting forwarding indication being set sent by the target SGSN, wherein the bearer request data forwarding list or the RABs To Be Setup List is sent by the source MME to the target SGSN; and
determining the bearer subject to data forwarding according to the bearer request data forwarding list or the RABs To Be Setup List.

6. The method according to claim 4, wherein the determining a bearer subject to data forwarding according to the data forwarding bearer information comprises:
determining, by the target SGSN, the bearer subj ect to data forwarding according to the bearer request data forwarding list or the RABs To Be Setup List, and according to at least one of a bearer QoS parameter accepted by the target RNC, a configured operator policy, and a configuration parameter of the target SGSN.

7. The method according to claim 1, wherein:
the receiving data forwarding bearer information comprises:
receiving, by a target Radio Network Controller (RNC), data forwarding bearer information sent by a target Serving GPRS Support Node (SGSN), wherein the data forwarding bearer information is generated by the target SGSN according to a bearer Quality of Service (QoS) parameter, a configured operator policy and/or a configuration parameter;
the determining a bearer subj ect to data forwarding according to the data forwarding bearer information comprises:
determining, by the target RNC, a bearer subj ect to data forwarding according to the data forwarding bearer information.

8. The method according to claim 7, wherein:
the data forwarding bearer information comprises a bearer request data forwarding list or comprises a Radio Access Bearers (RABs) To Be Setup List including a requesting forwarding indication.

9. The method according to claim 1, wherein:
the data forwarding bearer information comprises a bearer request data forwarding list, wherein the bearer request data forwarding list comprises a Radio Access Bearer (RAB) Identifier (ID) and an indication suggesting whether the bearer is subject to data forwarding;
the receiving data forwarding bearer information comprises:
receiving, by a target evolved NodeB (eNB) or a target Mobility Management Entity (MME), the data forwarding bearer information sent by a source Serving GPRS Support Node (SGSN);
the determining a bearer subj ect to data forwarding according to the data forwarding bearer information comprises:
determining, by the target eNB or target MME, a bearer subj ect to data forwarding according to the data forwarding bearer information.

10. The method according to claim 9, wherein the returning the bearer information about the bearer subject to data forwarding comprises:
returning, by the target eNB, a RABs Setup List to the source Radio Network Controller (RNC), wherein the RABs Setup List comprises the bearer information about the bearer subj ect to data forwarding.

11. The method according to claim 9 or claim 10, wherein:
the bearer request data forwarding list is generated by the source RNC, and is sent to the source SGSN; or
the bearer request data forwarding list is generated by the source SGSN according to a bearer Quality of Service (QoS) parameter, a configured operator policy and/or a configuration parameter.

12. The method according to claim 9, wherein the determining, by the target eNB, a bearer subject to data forwarding according to the data forwarding bearer information comprises:
receiving, by the target eNB, the data forwarding bearer information sent by the source SGSN, wherein the data forwarding bearer information comprises a bearer request data forwarding list or comprises a RABs To Be Setup List with a requesting forwarding indication being set; and
determining the bearer subject to data forwarding according to the bearer request data forwarding list or the RABs To Be Setup List.

13. The method according to claim 9, wherein the determining, by the target MME, a bearer subject to data forwarding according to the data forwarding bearer information comprises:
determining, by the target MME, a bearer subject to data forwarding according to the bearer request data forwarding list or the RABs To Be Setup List, and according to at least one of a bearer Quality of Service (QoS) parameter accepted by a target Radio Network Controller (RNC), a configured operator policy, and a configuration parameters of a target SGSN.

14. The method according to claim 1, wherein:
the data forwarding bearer information comprises a Radio Access Bearers (RABs) To Be Setup List, and an indication set in the RABs To Be Setup List suggesting whether the bearer is subj ect to data forwarding ; or
the data forwarding bearer information comprises a bearer request data forwarding list, wherein the bearer request data forwarding list comprises a RAB Identifier and an indication suggesting whether the bearer is subj ect to data forwarding; or
the data forwarding bearer information comprises a bearer request data forwarding list, wherein the bearer request data forwarding list comprises an identifier of the bearer suggested subj ect to data forwarding;
the receiving data forwarding bearer information comprises:
receiving, by a target evolved NodeB (eNB), the data forwarding bearer information sent by a target Mobility Management Entity (MME);
the determining a bearer subj ect to data forwarding according to the data forwarding bearer information comprises:
determining, by the target eNB, a bearer subj ect to data forwarding according to the data forwarding bearer information.

15. The method according to claim 14, wherein:
after the determining, by the target eNB, a bearer subject to data forwarding according to the data forwarding bearer information, the method further comprises:
allocating, by the target eNB, user-plane resources to the bearer subject to data forwarding according to the data forwarding bearer information.

16. An apparatus for data forwarding processing during handover, comprising:
a receiving module, configured to receive data forwarding bearer information, wherein the data forwarding bearer information suggests whether a bearer is subject to data forwarding;
a processing module, configured to determine a bearer subject to data forwarding according to the data forwarding bearer information; and
a sending module, configured to return bearer information about the bearer subject to data forwarding to perform data forwarding.

17. The apparatus according to claim 16, wherein the sending module comprises:
means for generating a Radio Access Bearers (RABs) To Be Setup List, and an indication set in the RABs To Be Setup List suggesting whether the bearer is subject to data forwarding, or generating a bearer request data forwarding list, wherein the bearer request data forwarding list comprises a RAB Identifier and an indication suggesting whether the bearer is subject to data forwarding, or generating a bearer request data forwarding list, wherein the bearer request data forwarding list comprises an identifier of the bearer suggested subj ect to data forwarding; and
means for sending the RABs To Be Setup List, or the bearer request data forwarding list, wherein the bearer request data forwarding list comprises the RAB ID and the indication suggesting whether the bearer is subject to data forwarding, or the bearer request data forwarding list, wherein the bearer request data forwarding list comprises an ID of the bearer suggested subject to data forwarding.

18. The apparatus according to claim 16, further comprising:
means for allocating user-plane resources to the bearer subject to data forwarding determined by the processing module according to the data forwarding bearer information.

19. A system for data forwarding processing during handover, comprising a target evolved NodeB (eNB) and a target Mobility Management Entity (MME) connected by signaling to the target eNB, wherein:
the target eNB is configured to receive data forwarding bearer information sent by the target MME, wherein the data forwarding bearer information suggests whether a bearer is subj ect to data forwarding; determine a bearer subj ect to data forwarding according to the data forwarding bearer information; and return bearer information about the bearer subject to data forwarding to perform data forwarding.

20. The system according to claim 19, wherein:
the data forwarding bearer information comprises a Radio Access Bearers (RABs) To Be Setup List, and an indication or set in the RABs To Be Setup List suggesting whether the bearer is subj ect to data forwarding; or
the data forwarding bearer information comprises a bearer request data forwarding list, wherein the bearer request data forwarding list comprises a RAB identifier and an indication suggesting whether the bearer is subj ect to data forwarding; or
the data forwarding bearer information comprises a bearer request data forwarding list, wherein the bearer request data forwarding list comprises an identifier of the bearer suggested subj ect to data forwarding.

21. The system according to claim 19 or claim 20, wherein:
the target eNB is further configured to allocate user-plane resources to the bearer subject to data forwarding according to the data forwarding bearer information.
